# EUROPEAN PATENT APPLICATION

(11) **EP 4 775 444 A1**
(43) Date of publication of application: **15.07.2026**
(21) Application number: 26150957.4
(22) Date of filing: 09.01.2026
(51) Int. Cl.: B60N 2/28

(54) **LOCKING MECHANISM AND CHILD SAFETY SEAT**

(30) Priority: 09.01.2025 CN 202510038899
(71) Applicant: Wonderland Switzerland AG, 6312 Steinhausen (CH)
(72) Inventor: FANG, Ganqing, Dongguan, Guangdong, 523648 (CN)
(74) Representative: Lucke, Andreas

(57) **Abstract**

The present disclosure provides a locking mechanism and a child safety seat. The locking mechanism is used to lock relative movement between a first component (100) and a second component (200). The second component (200) has at least one mating locking member (210). The locking mechanism includes a locking member (300) and a driving member (400). The locking member (300) is disposed on the first component (100). The locking member (300) has a locking pin (330) provided with a locking protrusion (332) in a radial direction and configured to be movable between a locked position and an unlocked position. When the locking pin (330) is in the locked position, the locking pin (330) is locked to the mating locking member (210) to block relative movement between the first component (100) and the second component (200). When the locking pin (330) is in the unlocked position, the locking pin (330) is unlocked from the mating locking member (210) to allow the relative movement between the first component (100) and the second component (200). The driving member (400) is configured to drive the locking pin (330) to move between the locked position and the unlocked position and to rotate the locking pin (330) about its own axis. The locking mechanism according to the present disclosure is capable of reliably maintaining or releasing relative positioning between the two components (100, 200).

## Description

### TECHNICAL FIELD

The present disclosure relates to locking mechanism and child safety seat.

### BACKGROUND

In engineering and daily practice, it is often necessary to lock and unlock the relative movement between two components. For example, an anchoring device for mounting a load-bearing base of a child safety seat on a vehicle seat is a connection structure of ISOFIX (International Standards Organization FIX, child safety seat fixing system). In order to adapt to different types of vehicles, most anchoring devices may adjust their telescopic length, which enables the movable bracket in the anchoring device to move relative to the base and requires a reliable locking mechanism to lock and unlock such relative movement.

### SUMMARY

An objective of the present disclosure is to provide a locking mechanism capable of reliably maintaining or releasing relative positioning between two components.

According to one aspect of the present disclosure, there is provided a locking mechanism for locking relative movement between a first component and a second component. The second component has at least one mating locking member. The locking mechanism includes a locking member and a driving member. The locking member is disposed on the first component and having a locking pin. The locking pin is provided with a locking protrusion in a radial direction and configured to be movable between a locked position and an unlocked position. When the locking pin is in the locked position, the locking pin is locked to the mating locking member to block relative movement between the first component and the second component. When the locking pin is in the unlocked position, the locking pin is unlocked from the mating locking member to allow the relative movement between the first component and the second component. The driving member is configured to drive the locking pin to move between the locked position and the unlocked position and to rotate the locking pin about its own axis.

In one embodiment, the mating locking member includes a locking hole. The locking hole is configured to have a greater width in a first direction than in a second direction, such that when the locking pin is in the locked position, the locking protrusion is inserted into the locking hole and faces the second direction, and the locking protrusion is blocked by an edge of the locking hole; when the locking pin is in the unlocked position, the locking protrusion faces the first direction without being blocked by the edge of the locking hole and exits the locking hole.

In one embodiment, the locking mechanism further includes an unlocking operation member, a rotating mechanism and a moving mechanism. The unlocking operation member is configured to drive movement of the driving member when the unlocking operation member is operated. The rotating mechanism is disposed between the driving member and the locking member for driving the locking pin to rotate about its own axis along with the movement of the driving member. The moving mechanism is disposed between the driving member and the locking member for driving the locking pin to move between the locked position and the unlocked position along with the movement of the driving member. The rotating mechanism and the moving mechanism are spaced apart such that when the driving member moves within a first range, the rotating mechanism drives the locking pin to rotate about its own axis; and when the driving member moves within a second range, the moving mechanism drives the locking pin to move between the locked position and the unlocked position.

In one embodiment, the rotating mechanism includes a rotating drive column and a rotating drive groove. One of the rotating drive column and the rotating drive groove is disposed on the locking member, and the other of the rotating drive column and the rotating drive groove is disposed on the driving member. The moving mechanism includes a moving drive column and a moving drive groove. The moving drive column is disposed on the locking member, and the moving drive groove is disposed on the driving member.

In one embodiment, the locking member is provided with a rotating drive column and a moving drive column. The rotating drive column and the moving drive column respectively extend along a radial direction of the locking member and are spaced apart from each other along the radial direction and an axial direction of the locking member. The driving member is provided with a rotating drive groove and a moving drive groove. The rotating drive groove cooperates with the rotating drive column and extends perpendicular to the axial direction of the locking member. The moving drive groove cooperates with the moving drive column and extends along a polyline. The rotating drive column passes through the rotating drive groove and is capable of being driven by the rotating drive groove to rotate, so that the locking member rotates about its own axis. The moving drive column passes through the moving drive groove and is capable of being driven by the moving drive groove to move, so that the locking member moves along its axis.

In one embodiment, the moving drive groove includes a moving vertical segment extending perpendicular to the axial direction of the locking member and a moving inclined segment extending obliquely relative to the axial direction of the locking member. The moving vertical segment and the moving inclined segment are connected at a moving junction. The rotating drive groove and the moving drive groove are configured such that when the driving member moves in a direction perpendicular to the axial direction of the locking member and drives the locking member to rotate to an intermediate position, the rotating drive groove drives the rotating drive column to rotate until it disengages from the rotating drive groove, and the moving drive column rotates to pass through the moving junction of the moving drive groove, such that the moving drive column is about to be driven by the moving inclined segment to move along the axial direction of the locking member; when the driving member moves in a direction perpendicular to the axial direction of the locking member, the moving inclined segment of the moving drive groove is capable of driving the moving drive column on the locking member in the intermediate position to move along the axial direction of the locking member until the locking pin of the locking member moves to the unlocked position.

In one embodiment, the locking member includes a locking pin seat, the locking pin is fixedly connected with the locking pin seat such that the locking pin and the locking pin seat rotate and move synchronously. The rotating drive column and the moving drive column are disposed on the locking pin seat, and the locking pin seat has a locking member connection groove. The locking mechanism further includes a locking member reset spring. One end of the locking member reset spring is inserted into the locking member connection groove of the locking member, so that the locking member reset spring is capable of providing a rotation reset force and a movement reset force for the locking member.

According to another aspect of the present disclosure, there is provided a child safety seat. The child safety seat includes a frame structure, an anchoring assembly for connecting to an anchor point of a vehicle; and the locking mechanism as above described. The frame structure is the first component. The anchoring assembly is the second component. The anchoring assembly includes an anchoring joint and a movable bracket movably disposed on the frame structure and connected to or integrally formed with the anchoring joint, and the mating locking member is formed on the movable bracket.

In one embodiment, the frame structure includes a transverse bracket, the locking member is movably disposed on the transverse bracket, and the driving member is movable relative to the transverse bracket and cooperates with the locking member.

In one embodiment, a spring seat is fixed on the transverse bracket, a locking member reset spring is disposed between the spring seat and the locking member, a first end of the locking member reset spring is inserted into a spring seat connecting groove of the spring seat, and a second end of the locking member reset spring is inserted into the locking member connection groove of the locking member, so that the locking member reset spring is capable of providing a rotation reset force and a movement reset force for the locking member, thereby tending to make the locking pin of the locking member rotate and move to the locked position.

In one embodiment, the anchoring assembly is provided with a plurality of the mating locking members, and a relative position between the frame structure and the anchoring assembly is adjustable by inserting the locking pin into different mating locking members.

The present disclosure has an advantage that the locking mechanism of the present disclosure is capable of reliably maintaining or releasing relative positioning between two components.

### BRIEF DESCRIPTION OF THE DRAWINGS

The accompanying drawings, which are incorporated into and constitute a part of this specification, illustrate embodiments consistent with the present disclosure, and serve to explain the principles of the present disclosure together with the description.

In the drawings,
FIG. 1 is a side schematic view of a base according to the present disclosure, wherein an anchoring joint extends out of the base.
FIG. 2 is a side schematic view of the base according to the present disclosure, wherein the anchoring joint retracts into the base.
FIG. 3 is a perspective view of the base shown in FIG. 2.
FIG. 4 is a perspective view of the anchoring device according to the present disclosure.
FIG. 5 is a top cross-sectional view of the anchoring device taken along line A-A of FIG. 4 and a partial enlarged view thereof.
FIG. 6 is a top perspective view of the anchoring device according to the present disclosure and a partial enlarged view thereof.
FIG. 7A shows a driving member in an initial position and a locking pin in a locked position from a top view.
FIG. 7B shows that the driving member drives the locking pin to rotate to an intermediate position from a top view.
FIG. 7C shows that the driving member drives the locking pin to move to an unlocked position from a top view.
FIG. 8 shows a position where the locking pin seat is in the locked state shown in FIG. 7A from a front view.
FIG. 9 shows a position where the locking pin seat is in the intermediate state shown in FIG. 7B from a front view.
FIG. 10 is a perspective view of one embodiment of the locking pin.
FIG. 11 is a perspective view of one embodiment of a locking member reset spring.
FIG. 12 is a front cross-sectional view of the anchoring device taken along line B-B of FIG. 5 and a partial enlarged view thereof.

### List of the Reference Numerals

1 base
100 first component, frame structure
   110 transverse bracket
      111 bracket positioning member
      112 spring seat
      113 spring seat connecting groove
   120 sleeve
      121 bushing
   130 support sliding groove
200 second component, anchoring assembly
   210 mating locking member, locking hole
      211 edge
   220 anchoring joint
   230 movable bracket
   240 bracket support rod
   250 synchronizing rod
300 locking member
   310 rotating drive column
   320 moving drive column
   330 locking pin
      331 locking end
      332 locking protrusion
      333 locking pin fixing hole
   340 locking pin seat
      341 locking member connection groove
   350 locking member reset spring
      351 first end
      352 second end
400 driving member
   410 rotating drive groove
   420 moving drive groove
      421 moving vertical segment
      422 moving inclined segment
      423 moving junction
   430 driving reset spring
500 unlocking operation member
600 pulling member
E first range
F second range
X first direction
Y second direction

### DETAILED DESCRIPTION

The present disclosure will be described in detail below with reference to the accompanying drawings.

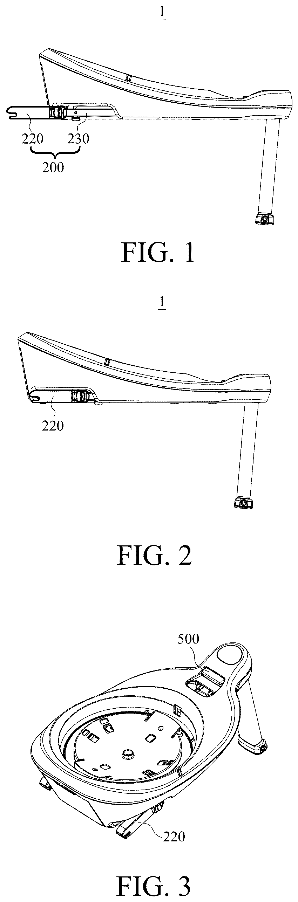

FIGS. 1 to 3 illustrate a base 1 of a carrier according to the present disclosure. The carrier may be used, for example, to carry a person, an animal, or an object, and is connected to a vehicle seat (not shown). When the carrier is a child safety seat, the carrier further includes a seat body (not shown) for carrying a child, and the seat body is mounted on the base 1.

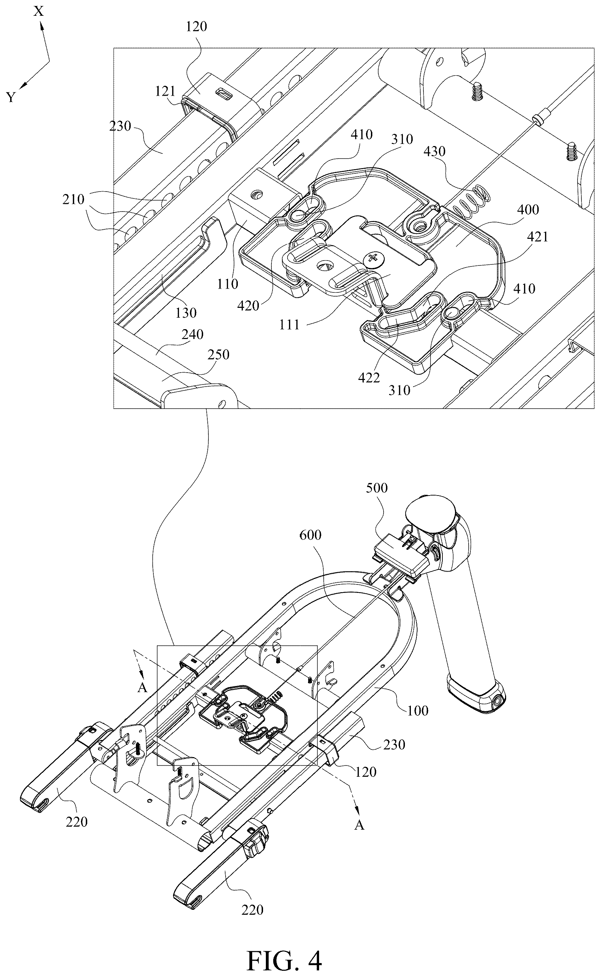

As shown in FIGS. 1 to 3, in order to securely and reliably connect the base 1 to the vehicle seat, an anchoring device may be provided in the base 1. The anchoring device includes an anchoring assembly 200 and a frame structure 100 on which the anchoring assembly 200 is movably disposed (see FIG. 4). The frame structure 100 may be regarded as a first component, the anchoring assembly 200 may be regarded as a second component, and relative movement is possible between the first component and the second component. The base 1 further includes a locking mechanism for locking relative movement between the first component 100 and the second component 200, and details of the locking mechanism will be described below. The anchoring assembly 200 may be used to connect to an anchor point of a vehicle and includes an anchoring joint 220. The anchoring joint 220 may be, for example, an ISOFIX joint, which may extend (see FIG. 1) and retract (see FIG. 2) relative to the rear end of the base 1. When the anchoring joint 220 extends out of the base 1, it may be engaged with corresponding accessories such as a connecting rod, a connecting ring, and an anchoring interface on the vehicle seat or other devices, thereby fixing the base 1 on the vehicle seat. Optionally, the front end of the base 1 further has a supporting foot, and an unlocking operation member 500 for unlocking the locking mechanism is provided beside the supporting foot (see FIG. 3).

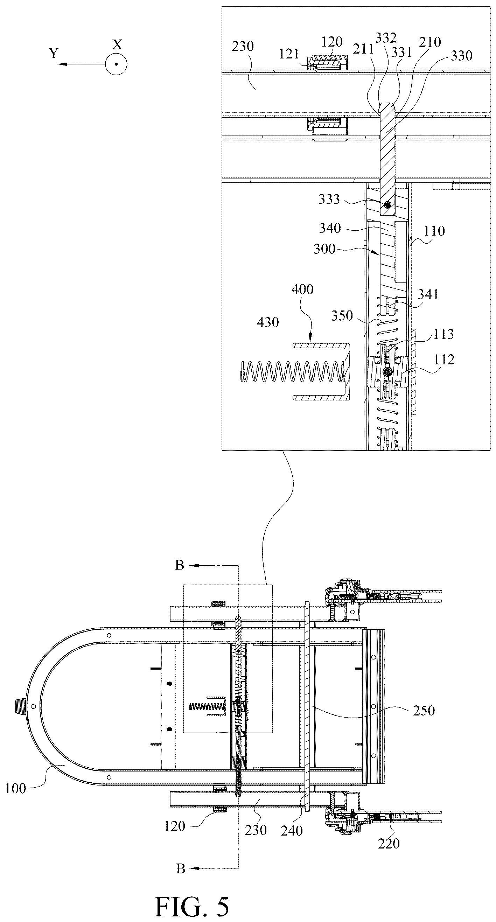

FIG. 4 shows an internal structure of the base 1 with a housing removed. As shown in FIGS. 4 and 5, the anchoring assembly 200 further includes a movable bracket 230. The movable bracket 230 is movably disposed on the frame structure 100 and connected to or integrally formed with the anchoring joint 220 to adjust a distance of the anchoring joint 220 relative to the base 1 where the frame structure 100 is located, so that the base 1 may be adapted to different types of vehicles or securely connected to different devices.

In the embodiment shown in FIGS. 4 and 5, a sleeve 120 is provided on the frame structure 100, and the movable bracket 230 is inserted through the sleeve 120 and is movable within the sleeve 120, so that the movable bracket 230 is movably disposed on the frame structure 100. The sleeve 120 may be a separate component connected to the frame structure 100 by welding, riveting, threaded connection, or the like. In other embodiments, the sleeve 120 may be integrally formed with the frame structure 100, that is, the movable bracket 230 is inserted through the frame structure 100 and is movable within the sleeve frame structure 100. A bushing 121 may be fixedly connected to the inside of the sleeve 120 to reduce friction between the movable bracket 230 and the sleeve 120. However, the present disclosure is not limited thereto. The movable bracket 230 may also be movably disposed on the frame structure 100 through a cooperation of a guide rail and a guide groove, or the like.

The movable bracket 230 and the anchoring joint 220 may be two separately manufactured components and then connected together by welding, riveting, threaded connection, or the like. The movable bracket 230 and the anchoring joint 220 may also be a single integrally formed component. In the embodiments shown in FIGS. 4 and 5, the frame structure 100 is substantially U-shaped and has an arc-shaped front frame and two parallel side frames. Two movable brackets 230 may be provided, respectively disposed on both sides of the frame structure 100. In order to enable the movable bracket 230 to move more stably, as shown in FIGS. 4 and 5, a bracket support rod 240 may be connected between the two movable brackets 230, and a support sliding groove 130 is provided on the frame structure 100, so that the bracket support rod 240 may pass through the support sliding groove 130 and slide within the support sliding groove 130. In the embodiments shown in FIGS. 4 and 5, a synchronizing rod 250 may also be fixedly connected between the two movable brackets 230 to enable the two movable brackets 230 to move synchronously.

Although the embodiment shown in the figures has the anchoring device disposed on the base 1, it should be understood that the anchoring device may also be disposed on other application devices such as a carrier.

After the anchoring joint 220 reaches a suitable distance relative to the base 1 where the frame structure 100 is located, it is necessary to maintain the anchoring joint 220 at this position. To this end, the present disclosure provides a locking mechanism capable of locking and unlocking the movable bracket 230 to adjust an extension distance of the anchoring joint 220 relative to the base 1.

The locking mechanism may include a locking member 300 and a driving member 400.

As shown in FIG. 5, the locking member 300 is disposed on the frame structure 100 and configured such that a locking pin 330 of the locking member 300 is movable relative to the frame structure 100 between a locked position and an unlocked position. The anchoring assembly 200 may have at least one mating locking member 210 for cooperating with the locking member 300. In the embodiment shown in FIG. 4, the mating locking member includes a locking hole 210 located on the movable bracket 230. In other embodiments, the mating locking member may include a locking groove, a hook, a stop plate, or the like (not shown) located on the movable bracket 230.

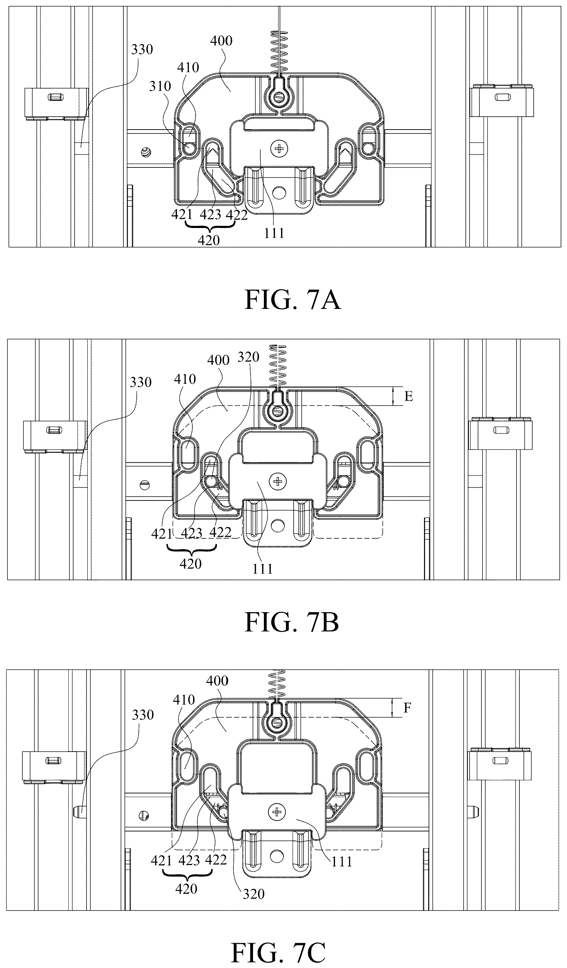

When the locking pin 330 of the locking member 300 is in the locked position, as shown in FIG. 5, the locking pin 330 is inserted into the locking hole 210 on the movable bracket 230 to block relative movement between the anchoring assembly 200 and the frame structure 100. When the locking pin 330 of the locking member 300 is in the unlocked position, as shown in FIG. 7C, the locking pin 330 is unlocked from the locking hole 210 to allow the relative movement between the anchoring assembly 200 and the frame structure 100.

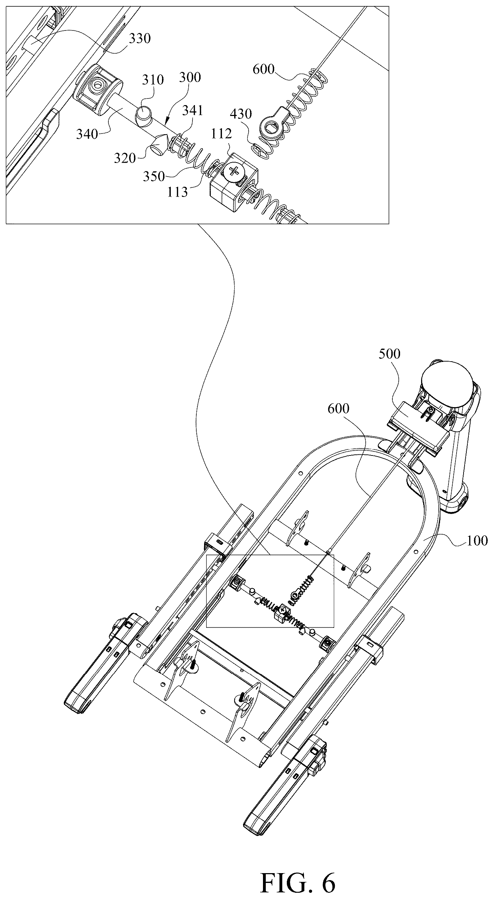

In the embodiments shown in FIGS. 5 and 6, the locking member 300 may include a locking pin seat 340, and the locking pin 330 is fixedly connected to the locking pin seat 340 such that they rotate and move synchronously. To ensure strength, the locking pin 330 is usually made of metal, making it difficult to machine special structures (for example, the rotating drive column 310 and the moving drive column 320 described below are special structures), while the locking pin seat 340 may be made of easily machined materials such as plastic. The combined use of the locking pin 330 and the locking pin seat 340 allows special structures to be easily formed on the locking member 300. In addition, by providing the locking pin seat 340, when the locking pin 330 is damaged, there is no need to replace the entire locking member 300, and only the locking pin 330 needs to be replaced.

As shown in FIG. 5, one end of the locking pin 330 may be provided with a locking pin fixing hole 333. After this end is inserted into the receiving portion of the locking pin seat 340, the locking pin 330 and the locking pin seat 340 are fixed together by inserting a pin into the locking pin fixing hole 333. It should be understood that the locking pin 330 and the locking pin seat 340 may also be fixed together by other means such as threaded connection.

The locking member 300 may not include the locking pin seat 340, instead form a unitary structure.

In the embodiment shown in FIG. 4, the movable bracket 230 is provided with a plurality of locking holes 210, and the relative position between the anchoring assembly 200 and the frame structure 100 may be adjusted by inserting the locking pin 330 (see FIG. 5) into different locking holes 210.

In the embodiments shown in FIGS. 4 and 5, the frame structure 100 includes a transverse bracket 110, and the locking member 300 is movably disposed on the transverse bracket 110. In order to facilitate sliding connection of the locking member 300, the locking member 300 may be disposed inside the transverse bracket 110. Certainly, the locking member 300 may also be disposed outside the transverse bracket 110.

According to the present disclosure, the driving member 400 and the locking member 300 are configured such that the driving member 400 may drive the rotation and movement of the locking member 300, that is, the driving member 400 may drive the locking pin 330 of the locking member 300 to move between the locked position and the unlocked position and rotate the locking pin 330 about the locking pin's own axis, so that the locking member 300 and its locking pin 330 may perform a combined motion, thereby being suitable for more complex applications or needs.

Specifically, the driving member 400 is movable relative to the transverse bracket 110 and cooperate with the locking member 300.

As shown in FIG. 4, the transverse bracket 110 is provided with a bracket positioning member 111 to guide the driving member 400 to move in a direction perpendicular to an axial direction of the locking member 300.

In order to facilitate the operation of the driving member 400, the locking mechanism according to the present disclosure may further include an unlocking operation member 500, which may be operated to drive the movement of the driving member 400. The unlocking operation member 500 is configured to be exposed to the outside to allow the user to apply an acting force thereto. Certainly, the locking mechanism according to the present disclosure may not include the unlocking operation member 500, as long as the driving member 400 is exposed to the outside, and the user can directly apply an acting force to the driving member 400.

In the embodiment shown in FIG. 4, the unlocking operation member 500 may be disposed at a connection position between the frame structure 100 and a leg of the base 1 to facilitate user operation. In this case, the unlocking operation member 500 may drive the driving member 400 via a pulling member 600. The pulling member 600 may be a steel wire, a traction rod, or other members capable of transmitting an acting force. Certainly, in other embodiments, the unlocking operation member 500 may be directly connected to and drive the driving member 400 without providing the pulling member 600.

The locking mechanism according to the present disclosure further includes a rotating mechanism and a moving mechanism.

The rotating mechanism is disposed between the driving member 400 and the locking member 300, such that the movement of the driving member 400 can drive the locking pin 330 to rotate about its own axis.

The moving mechanism is also disposed between the driving member 400 and the locking member 300, such that the movement of the driving member 400 can drive the locking pin 330 to move between the locked position and the unlocked position.

The rotating mechanism and the moving mechanism are spaced apart, so that when the driving member 400 moves within a first range E (see FIG. 7B), the rotating mechanism drives the locking pin 330 to rotate about its own axis; when the driving member 400 moves within a second range F (see FIG. 7C), the moving mechanism drives the locking pin 330 to move between the locked position and the unlocked position.

Optionally, the rotating mechanism may be disposed on one of the driving member 400 and the locking member 300, or a part of the rotating mechanism may be disposed on the driving member 400 and the other part of the rotating mechanism may be disposed on the locking member 300. Similarly, the moving mechanism may be disposed on one of the driving member 400 and the locking member 300, or a part of the moving mechanism may be disposed on the driving member 400 and the other part of the moving mechanism may be disposed on the locking member 300, as long as the movement of the driving member 400 can drive the locking pin 330 to move between the locked position and the unlocked position and rotate about its own axis, which is not particularly limited herein. In one embodiment, the rotating mechanism includes a rotating drive column 310 (see FIG. 6) and a rotating drive groove 410 (see FIG. 7A), the rotating drive column 310 is disposed on the locking member 300, and the rotating drive groove 410 is disposed on the driving member 400. The moving mechanism includes a moving drive column 320 (see FIG. 6) and a moving drive groove 420 (see FIG. 7A), the moving drive column 320 is disposed on the locking member 300, and the moving drive groove 420 is disposed on the driving member 400.

In some embodiments, the rotating drive column and the moving drive groove 420 may also be disposed on the driving member 400, and the moving drive column 320 and the rotating drive groove may be disposed on the locking member 300.

In still other embodiments, the rotating drive column 310 and the rotating drive groove 410 may be replaced with a gear and a rack, that is, a rack extending along a movement direction thereof is disposed on a surface of the driving member 400, and a 90-degree sector gear is disposed on an end of the locking pin 330 away from the locking hole. When the driving member is driven by the unlocking operation member to move forward, the rack moves accordingly and forces the sector gear to rotate 90 degrees by meshing with the sector gear, so that the locking protrusion 332 on the locking pin 330 rotates to face the first direction X.

As shown in FIG. 6, the locking member 300 is provided with a rotating drive column 310 and a moving drive column 320, the rotating drive column 310 and the moving drive column 320 respectively extend along the radial direction of the locking member 300 and are spaced apart from each other along the radial direction and the axial direction of the locking member 300. When the rotating drive column 310 is driven, it may drive the locking member 300 to rotate about its own axis. When the moving drive column 320 is driven, it may drive the locking member 300 to move along its axis.

In the embodiment where the locking member 300 includes a locking pin seat 340, as shown in FIG. 6, the rotating drive column 310 and the moving drive column 320 may be disposed on the locking pin seat 340.

By providing the rotating drive column 310 and the moving drive column 320, the locking member 300 and its locking pin 330 may first be driven by the rotating drive column 310 to rotate the locking pin 330 about its own axis, and then be driven by the moving drive column 320 to move along the axial direction of the locking pin 330.

Cooperatively, as shown in FIGS. 7A to 7C, the driving member 400 is provided with a rotating drive groove 410 for driving the rotating drive column 310 and a moving drive groove 420 for driving the moving drive column 320. The rotating drive groove 410 cooperates with the rotating drive column 310 and extends perpendicular to the axial direction of the locking member 300, and the moving drive groove 420 cooperates with the moving drive column 320 and extends along a polyline. In the present disclosure, the polyline refers to two straight lines connected together and forming a certain included angle.

As shown in FIGS. 7A to 7C, the rotating drive column 310 passes through the rotating drive groove 410 and may be driven by the rotating drive groove 410 to rotate, so that the locking member 300 rotates about its own axis. The moving drive column 320 passes through the moving drive groove 420 and may be driven by the moving drive groove 420 to move, so that the locking member 300 moves along its axis.

In the embodiments shown in FIGS. 7A to 7C, the moving drive groove 420 extending along the polyline includes a moving vertical segment 421 extending perpendicular to the axial direction of the locking member 300 and a moving inclined segment 422 extending obliquely relative to the axial direction of the locking member, and the moving vertical segment 421 and the moving inclined segment 422 are connected at a moving junction 423.

Although the rotating drive column 310 and the rotating drive groove 410 as shown are arranged closer to the locking hole 210 than the moving drive column 320 and the moving drive groove 420, it should be understood that the rotating drive column 310 and the rotating drive groove 410 may be arranged farther from the locking hole 210 than the moving drive column 320 and the moving drive groove 420.

In other embodiments, the locking member may be a combination of a gear and a lead screw. The locking pin seat is a gear with internal threads on its inner peripheral surface, and the locking pin is a lead screw inserted through the gear. A rack may be disposed on the driving member. When the locking pin is inserted into the locking hole, the external threads on the lead screw are in clearance fit with an edge of the locking hole to avoid accidental unlocking, and the external threads function as locking protrusions. When the driving member is driven by the unlocking operation member to move forward, the rack moves accordingly and forces the gear to rotate by meshing with the gear, and the internal threads of the gear drive the lead screw to move and pivot in a direction away from the locking hole to achieve unlocking.

FIGS. 7A to 7C illustrate an embodiment of the combined motion that the locking member 300 and its locking pin 330 may be implemented, which describes the movement process of the locking member 300 and its locking pin 330 from the locked position to the unlocked position.

As shown in FIG. 7A, the locking member 300 is in the locked position where the locking pin 330 is inserted into the locking hole 210, and the driving member 400 is in the initial position. At this time, the rotating drive column 310 passes through the rotating drive groove 410, but since the rotating drive column 310 and the moving drive column 320 are spaced apart from each other along the radial direction of the locking member 300, the moving drive column 320 does not pass through the moving drive groove 420.

In a first process where the driving member 400 is applied with an acting force by the user to move within the first range E in a direction perpendicular to the axial direction of the locking member 300 and finally drives the locking member 300 to rotate about its own axis to the intermediate position, the rotating drive groove 410 drives the rotating drive column 310 to rotate until it is disengaged from the rotating drive groove 410. Meanwhile, the moving drive column 320 rotates to pass through the moving junction 423 of the moving drive groove 420, such that the moving drive column 320 is about to be driven by the moving inclined segment 422 to move along the axial direction of the locking member 300, as shown in FIG. 7B. A dashed line in FIG. 7B indicates the initial position of the driving member 400, and the first range E indicates a range in which the driving member 400 moves during the first process. In this first process, the movement of the locking member 300 and its locking pin 330 is axial rotation around the locking pin 330.

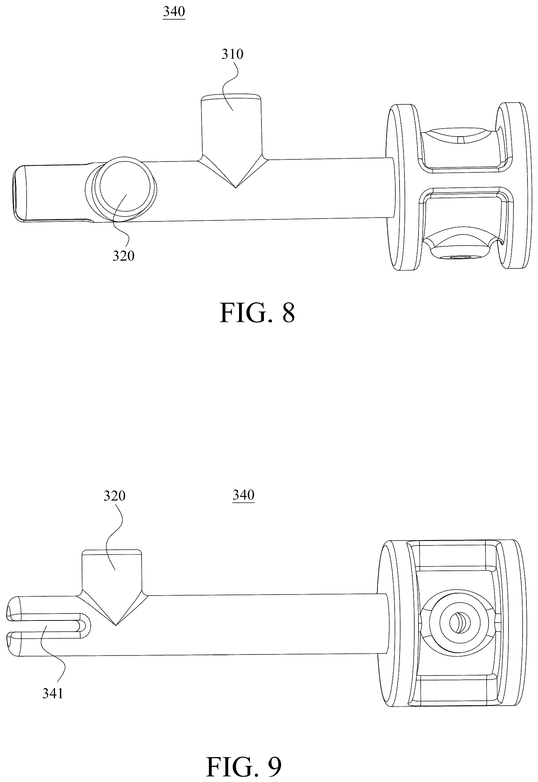

In the embodiment shown in FIG. 8, the rotating drive column 310 and the moving drive column 320 may be arranged to be spaced apart by approximately 90 degrees along the radial direction of the locking member 300, such that when the rotating drive groove 410 drives the rotating drive column 310 to rotate until it is disengaged from the rotating drive groove 410, the moving drive column 320 just rotates to a position perpendicular to the moving drive groove 420, facilitating the moving drive groove 420 to drive the moving drive column 320. However, the present disclosure is not limited thereto. The rotating drive column 310 and the moving drive column 320 may be spaced apart by other angles such as 80 degrees or 100 degrees along the radial direction of the locking member 300, and the combined motion of the locking member 300 and its locking pin 330 described above may also be implemented.

In a second process where the driving member 400 continues to move within the second range F in a direction perpendicular to the axial direction of the locking member 300, the moving inclined segment 422 of the moving drive groove 420 drives the moving drive column 320 of the locking member 300 in the intermediate position to move along the axial direction of the locking member 300 toward the unlocked position (e.g., toward a retracted direction). The moving drive column 320 drives the locking member 300 and its locking pin 330 to move to the unlocked position, so that the locking pin 330 is disengaged from the locking hole 210, as shown in FIG. 7C. The dashed line in FIG. 7C indicates a position of the driving member 400 in FIG. 7B, and the second range F indicates a range in which the driving member 400 moves during the second process. In this second process, the movement of the locking member 300 and its locking pin 330 is an axial movement along the locking member 300.

In the above-described first and second processes, when the locking member 300 is driven by the driving member 400 to rotate to the intermediate position, the rotating drive column 310 is just disengaged from the rotating drive groove 410, and the moving drive column 320 just passes through the moving junction 423 of the moving drive groove 420 to be driven by the moving inclined segment 422. This moment corresponds to a boundary between the movement of the driving member 400 within the first range E and the movement within the second range F.

In the above-described combined motion of the locking member 300 and its locking pin 330 from the locked position to the unlocked position, the locking member 300 and its locking pin 330 first rotate and then move, which can prevent the locking protrusion 332 from easily interfering with the narrow edge 211 of the locking hole 210 along the second direction Y. Therefore, compared with the design where the locking member 300 and its locking pin 330 rotate and move simultaneously, the arrangement of the positional spacing between the plurality of locking holes 210 is more flexible.

In order to facilitate the user and ensure that the locking member 300 and its locking pin 330 are maintained in the locked position, the locking mechanism may further include a locking member reset spring 350 configured to provide a rotation reset force and a movement reset force for the locking member 300, thereby tending to make the locking member 300 and its locking pin 330 move and rotate to the locked position.

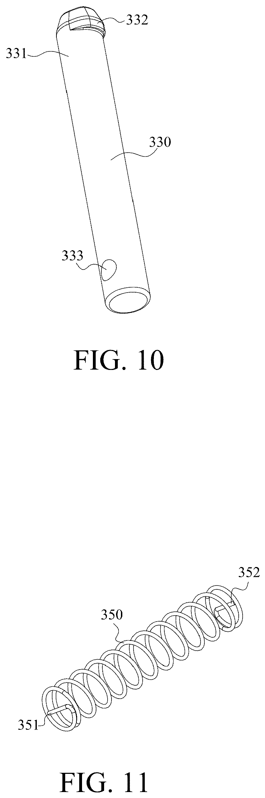

In the embodiments shown in FIGS. 5 and 6, a spring seat 112 may be fixed on the transverse bracket 110, and a locking member reset spring 350 is disposed between the spring seat 112 and the locking pin seat 340 of the locking member 300. A first end 351 (see FIG. 11) of the locking member reset spring 350 may be inserted into the spring seat connecting groove 113 of the spring seat 112, and a second end 352 (see FIG. 11) of the locking member reset spring 350 may be inserted into the locking member connection groove 341 of the locking pin seat 340, so that the locking member reset spring 350 may provide a movement reset force and a rotation reset force for the locking member 300.

For aesthetic purposes, both the spring seat 112 and the locking member reset spring 350 may be disposed inside the transverse bracket 110.

In the aforementioned first process, the driving member 400 is applied with an acting force by the user to drive the locking member 300 to rotate about its own axis, and the locking member reset spring 350 is twisted.

In the aforementioned second process, the user continues to apply an acting force to the driving member 400 to drive the locking member 300 and its locking pin 330 to move along the locking member's axis toward the unlocked position (e.g., toward the retracted direction), and the locking member reset spring 350 is compressed.

When the user no longer applies an acting force to the driving member 400, the locking member 300 may move and rotate to the locked position under the movement reset force and the rotation reset force of the locking member reset spring 350.

During this process, opposite to a direction of the aforementioned second process, under the action of the movement reset force of the locking member reset spring 350, the locking member 300 and the moving drive column 320 thereon move along the locking member's axis toward the locked position (e.g., toward the extended direction) until the moving drive column 320 moves to the moving junction 423 of the moving drive groove 420, the rotating drive column 310 moves to align with the rotating drive groove 410, and the locking pin 330 is inserted into the locking hole 210, as shown in FIG. 7B. During this process, by pressing the moving inclined segment 422 of the moving drive groove 420 through the moving drive column 320, the driving member 400 is driven to move toward the initial position in a direction perpendicular to the axial direction of the locking member 300.

Then, opposite to the direction of the aforementioned first process, under the action of the rotation reset force of the locking member reset spring 350, the locking member 300 and the rotating drive column 310 thereon rotate to a certain angle around the axial direction of the locking member 300, as shown in FIG. 7A. During this process, by driving the rotating drive groove 410 through the rotating drive column 310, the driving member 400 is driven to continue moving to the initial position in a direction perpendicular to the axial direction of the locking member 300.

In order to return the driving member 400 to the initial position, in the embodiments shown in FIGS. 4 to 6, the locking mechanism according to the present disclosure may further include a driving reset spring 430, which may be disposed between the driving member 400 and the frame structure 100 and tends to move the driving member 400 to the initial position.

The aforementioned embodiment of the combined motion of the locking member 300 and its locking pin 330 is particularly applicable to the case where the locking end 331 of the locking pin 330 inserted into the locking hole 210 is provided with a locking protrusion 332 as shown in FIG. 10.

According to some carriers with locking mechanisms known to inventors, in order to prevent the locking pin from accidentally colliding with the edge of the locking hole when inserting into or withdrawing from the locking hole, the width of the locking hole is usually set to be relatively wide (e.g., the width of the locking hole is more than twice the width of the locking pin). Therefore, when the locking pin is inserted into the locking hole, there is a large gap between the locking pin and the edge of the locking hole. In the event of a vehicle collision, the locking pin may slide out from the gap between the locking pin and the locking hole, resulting in accidental unlocking.

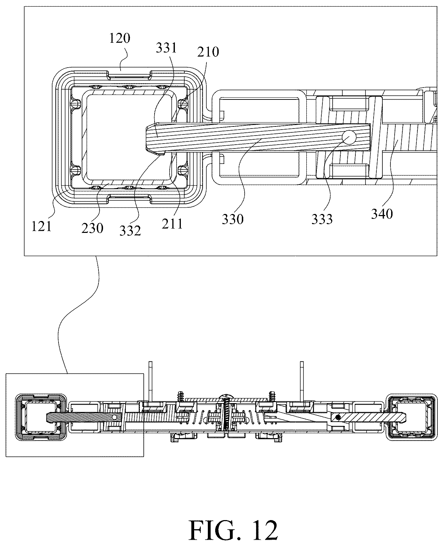

In order to ensure the safety of the locked position of the anchoring assembly and avoid the locking pin sliding out from the gap between the locking pin and the locking hole, as shown in FIG. 12, the locking end 331 of the locking pin 330 inserted into the locking hole 210 may be provided with a locking protrusion 332 configured to be engaged with the edge 211 of the locking hole 210. Since the locking protrusion 332 is blocked by the edge 211 of the locking hole 210, the accidental disengagement of the locking pin 330 from the locking hole 210 can be effectively avoided.

Corresponding to the locking protrusion 332, the locking hole 210 may be configured to have a greater width in the first direction X (see FIGS. 4 and 5) than in the second direction Y (see FIGS. 4 and 5), such that when the locking pin 330 is in the locked position, as shown in FIG. 5, the locking protrusion 332 is inserted into the locking hole 210 and faces the second direction Y, and the locking protrusion 332 is blocked by the edge 211 of the locking hole 210; when the locking pin 330 is in the unlocked position, the locking protrusion 332 faces the first direction X without being blocked by the edge 211 of the locking hole 210 and exits the locking hole 210.

As shown in FIG. 12, the locking protrusion 332 may be configured to protrude toward at least one direction along the radial direction of the locking pin 330, to be engaged with the edge 211 of the locking hole 210. The locking hole 210 may be circular, elliptical, or another suitable shape, as long as its maximum aperture allows the locking end 331 of the locking pin 330 to pass through together with the locking protrusion 332.

Although in the embodiment shown in FIG. 10, the locking protrusion 332 protrudes toward one direction along the radial direction of the locking pin 330, it should be understood that the locking protrusion 332 may also protrude toward multiple directions to form, together with the locking end 331 of the locking pin 330, a cross-section of, for example, a linear shape, a cross shape, or another shape. The locking hole 210 may be formed in a corresponding shape. When the cross-sectional shape of the locking end 331 of the locking pin 330 together with the locking protrusion 332 is aligned with the shape of the locking hole 210, the locking protrusion 332 is disengaged from the edge 211 of the locking hole 210, and the locking end 331 of the locking pin 330 can enter or exit the locking hole 210. When the cross-sectional shape of the locking end 331 of the locking pin 330 together with the locking protrusion 332 is not aligned with the shape of the locking hole 210, the locking protrusion 332 is engaged with the edge 211 of the locking hole 210, and the locking end 331 of the locking pin 330 cannot enter or exit the locking hole 210.

However, when the user needs to unlock, the locking pin 330 may be difficult to be disengaged from the locking hole 210 due to the locking protrusion 332, and even the locking protrusion 332 may get stuck with the edge 211 of the locking hole 210, resulting in failure to unlock.

The aforementioned embodiment of the combined motion of the locking member 300 and its locking pin 330 can effectively solve this problem.

In the aforementioned first process, the driving member 400 drives the locking member 300 and its locking pin 330 to first rotate about its own axis, so that the locking protrusion 332 of the locking pin 330 is driven by the locking pin 330 to rotate. When the rotating drive column 310 rotates until it is disengaged from the rotating drive groove 410, the locking protrusion 332 is disengaged from the edge 211 of the locking hole 210, allowing the locking end 331 of the locking pin 330 to exit the locking hole 210.

In the aforementioned second process, the driving member 400 drives the locking member 300 and its locking pin 330 to move along the locking member's axis to the unlocked position, so that the locking pin 330 of the locking member 300 is disengaged from the locking hole 210.

Thus, the situation where the locking pin 330 is difficult to be disengaged from the locking hole 210 due to the locking protrusion 332 can be effectively avoided.

The aforementioned combined motion of the locking member 300 and its locking pin 330 may also be applied to other applications as needed.

In addition, it should be noted that in the locking mechanism according to the present disclosure, even if the locking pin 330 is not provided with the locking protrusion 332, the position of the anchoring assembly 200 can still be reliably locked, and the accidental disengagement of the locking pin 330 from the locking hole 210 can be avoided. As described previously, the rotating drive column 310 extends along the radial direction of the locking member 300 (i.e., perpendicular to the axial direction of the locking member 300), and the rotating drive groove 410 also extends perpendicular to the axial direction of the locking member 300. Therefore, when the locking member 300 is in the locked position where the locking pin 330 is inserted into the locking hole 210, as shown in FIG. 7A, the rotating drive column 310 passes through the rotating drive groove 410, thereby being blocked by the rotating drive groove 410 from moving along the axial direction of the locking member 300. In turn, the locking member 300 where the rotating drive column 310 is located cannot move along its axial direction, thus ensuring that the locking pin 330 remains inserted into the locking hole 210.

Furthermore, the rotation reset force and movement reset force provided by the locking member reset spring 350 and the elastic force provided by the driving reset spring 430 can further ensure that the locking member 300 and its locking pin 330 are maintained in the locked position.

In addition, although in the aforementioned embodiments, the locking mechanism according to the present disclosure has been described by taking the frame structure 100 as the first component and the anchoring assembly 200 as the second component as examples, the present disclosure is not limited thereto. The locking mechanism according to the present disclosure may also be used to lock or unlock the relative positioning between other first components and second components. For example, the first component may be a box body, and the second component may be a box cover pivotally connected to the box body. The locking mechanism according to the present disclosure may be used to lock or unlock the box cover to close or open the box body.

## Claims

1. A locking mechanism for locking relative movement between a first component (100) and a second component (200), the second component (200) having at least one mating locking member (210), the locking mechanism comprising:
a locking member (300) disposed on the first component (100) and having a locking pin (330), the locking pin (330) being provided with a locking protrusion (332) in a radial direction and configured to be movable between a locked position and an unlocked position, wherein when the locking pin (330) is in the locked position, the locking pin (330) is locked to the mating locking member (210) to block relative movement between the first component (100) and the second component (200); when the locking pin (330) is in the unlocked position, the locking pin (330) is unlocked from the mating locking member (210) to allow the relative movement between the first component (100) and the second component (200); and
a driving member (400) configured to drive the locking pin (330) to move between the locked position and the unlocked position and to rotate the locking pin (330) about its own axis.

2. The locking mechanism according to claim 1, wherein the mating locking member (210) comprises a locking hole (210), the locking hole (210) is configured to have a greater width in a first direction than in a second direction, such that when the locking pin (330) is in the locked position, the locking protrusion (332) is inserted into the locking hole (210) and faces the second direction, and the locking protrusion (332) is blocked by an edge (211) of the locking hole (210); when the locking pin (330) is in the unlocked position, the locking protrusion (332) faces the first direction without being blocked by the edge (211) of the locking hole (210) and exits the locking hole (210).

3. The locking mechanism according to claim 1 or 2, further comprising:
an unlocking operation member (500) configured to drive movement of the driving member (400) when the unlocking operation member (500) is operated;
a rotating mechanism disposed between the driving member (400) and the locking member (300) for driving the locking pin (330) to rotate about its own axis along with the movement of the driving member (400); and
a moving mechanism disposed between the driving member (400) and the locking member (300) for driving the locking pin (330) to move between the locked position and the unlocked position along with the movement of the driving member (400);
wherein the rotating mechanism and the moving mechanism are spaced apart such that when the driving member (400) moves within a first range (E), the rotating mechanism drives the locking pin (330) to rotate about its own axis; and when the driving member (400) moves within a second range (F), the moving mechanism drives the locking pin (330) to move between the locked position and the unlocked position.

4. The locking mechanism according to claim 3, wherein the rotating mechanism comprises a rotating drive column (310) and a rotating drive groove (410), one of the rotating drive column (310) and the rotating drive groove (410) is disposed on the locking member (300), and the other of the rotating drive column (310) and the rotating drive groove (410) is disposed on the driving member (400);
the moving mechanism comprises a moving drive column (320) and a moving drive groove (420), the moving drive column (320) is disposed on the locking member (300), and the moving drive groove (420) is disposed on the driving member (400).

5. The locking mechanism according to any one of claims 1 to 4, wherein the locking member (300) is provided with a rotating drive column (310) and a moving drive column (320), the rotating drive column (310) and the moving drive column (320) respectively extend along a radial direction of the locking member (300) and are spaced apart from each other along the radial direction and an axial direction of the locking member (300);
the driving member (400) is provided with a rotating drive groove (410) and a moving drive groove (420), the rotating drive groove (410) cooperates with the rotating drive column (310) and extends perpendicular to the axial direction of the locking member (300), and the moving drive groove (420) cooperates with the moving drive column (320) and extends along a polyline; and
the rotating drive column (310) passes through the rotating drive groove (410) and is capable of being driven by the rotating drive groove (410) to rotate, so that the locking member (300) rotates about its own axis;
the moving drive column (320) passes through the moving drive groove (420) and is capable of being driven by the moving drive groove (420) to move, so that the locking member (300) moves along its axis.

6. The locking mechanism according to claim 5, wherein the moving drive groove (420) comprises a moving vertical segment (421) extending perpendicular to the axial direction of the locking member (300) and a moving inclined segment (422) extending obliquely relative to the axial direction of the locking member (300), the moving vertical segment (421) and the moving inclined segment (422) are connected at a moving junction (423); and
the rotating drive groove (410) and the moving drive groove (420) are configured such that:
when the driving member (400) moves in a direction perpendicular to the axial direction of the locking member (300) and drives the locking member (300) to rotate to an intermediate position, the rotating drive groove (410) drives the rotating drive column (310) to rotate until the rotating drive column (310) disengages from the rotating drive groove (410), and the moving drive column (320) rotates to pass through the moving junction (423) of the moving drive groove (420), such that the moving drive column (320) is about to be driven by the moving inclined segment (422) to move along the axial direction of the locking member (300);
when the driving member (400) moves in a direction perpendicular to the axial direction of the locking member (300), the moving inclined segment (422) of the moving drive groove (420) is capable of driving the moving drive column (320) on the locking member (300) in the intermediate position to move along the axial direction of the locking member (300) until the locking pin (330) of the locking member (300) moves to the unlocked position.

7. The locking mechanism according to any one of claims 4 to 6, wherein the locking member (300) comprises a locking pin seat (340), the locking pin (330) is fixedly connected with the locking pin seat (340) such that the locking pin (330) and the locking pin seat (340) rotate and move synchronously, the rotating drive column (310) and the moving drive column (320) are disposed on the locking pin seat (340), and the locking pin seat (340) has a locking member connection groove (341);
the locking mechanism further comprises a locking member reset spring (350), one end of the locking member reset spring (350) is inserted into the locking member connection groove (341) of the locking member (300), so that the locking member reset spring (350) is capable of providing a rotation reset force and a movement reset force for the locking member (300).

8. A child safety seat, comprising:
a frame structure (100);
an anchoring assembly (200) for connecting to an anchor point of a vehicle; and
the locking mechanism according to any one of claims 1 to 7, wherein the frame structure (100) is the first component (100), the anchoring assembly (200) is the second component (200), and the anchoring assembly (200) comprises:
an anchoring joint (220); and
a movable bracket (230) movably disposed on the frame structure (100) and connected to or integrally formed with the anchoring joint (220), and the mating locking member (210) being formed on the movable bracket (230).

9. The child safety seat according to claim 8, wherein the frame structure (100) comprises a transverse bracket (110), the locking member (300) is movably disposed on the transverse bracket (110), and the driving member (400) is movable relative to the transverse bracket (110) and cooperates with the locking member (300).

10. The child safety seat according to claim 9, wherein a spring seat (112) is fixed on the transverse bracket (110), a locking member reset spring (350) is disposed between the spring seat (112) and the locking member (300), a first end (351) of the locking member reset spring (350) is inserted into a spring seat connecting groove (113) of the spring seat (112), and a second end (352) of the locking member reset spring (350) is inserted into the locking member connection groove (341) of the locking member (300), so that the locking member reset spring (350) is capable of providing a rotation reset force and a movement reset force for the locking member (300), thereby tending to make the locking pin (330) of the locking member (300) rotate and move to the locked position.

11. The child safety seat according to any one of claims 8 to 10, wherein the anchoring assembly (200) is provided with a plurality of the mating locking members (210), and a relative position between the frame structure (100) and the anchoring assembly (200) is adjustable by inserting the locking pin (330) into different mating locking members (210).
